# EUROPEAN PATENT APPLICATION

(11) **EP 1 977 830 A1**
(43) Date of publication of application: **08.10.2008**
(21) Application number: 07105346.6
(22) Date of filing: 30.03.2007
(51) Int. Cl.: B01L 3/00, B01L 7/00, F15C 5/00

(54) **Micro-fluidic temperature driven valve**

(71) Applicant: Roche Diagnostics GmbH, 68305 Mannheim (DE); F. Hoffmann-La Roche AG, 4070 Basel (CH)
(72) Inventor: Glauser, Michael, 6343 Rotkreuz (CH)
(74) Representative: Herren, Barbara

(57) **Abstract**

Subject of the present invention is a micro-fluidic device (1) for the use in an apparatus for analyzing a liquid sample by nucleic acid amplification, an apparatus for analyzing a liquid sample by nucleic acid amplification, a method for analyzing a liquid sample and a method for amplifying nucleic acids in a liquid.

## Description

### Field of the invention

Subject of the present invention is a micro-fluidic device for the use in an apparatus for analyzing a liquid sample by nucleic acid amplification, an apparatus for analyzing a liquid sample by nucleic acid amplification, a method for analyzing a liquid sample and a method for amplifying nucleic acids in a liquid.

### Background of the invention

The invention is particularly useful in the field of health care as well as research in biological and medical science, particularly in nucleic acid analysis, gene quantification and genotyping, where reliable analysis of samples for components contained therein is needed. Methods and devices for amplifying nucleic acids are well known in the art.

A method that uses reactions cycles including denaturation and amplification steps is the polymerase chain reaction (PCR). This technology has revolutionized the field of nucleic acid treatment, particularly the analysis of nucleic acids, by providing a tool to increase the amount of nucleic acids of a particular sequence from negligible to detectable amounts. PCR is described e.g. in EP 0201184 and EP 0200362. An instrument for performing thermocycles in controlled manner on samples in tubes using heating and cooling an extended metal block is disclosed e.g. in EP 0236069.

More recently improved and more powerful PCR techniques have been developed. Quantitative real time PCR is a laboratory technique used to simultaneously quantify and amplify a specific part of a given DNA molecule. It is used to determine whether or not a specific sequence is present in the sample and if present, the number of copies in the sample can be quantified. Two common methods of quantification are the use of fluorescent dyes that intercalate with double-strand DNA and modified DNA oligonucleotide probes that fluoresce when hybridized with a complementary DNA. Such methods are described e.g. in EP 0512334.

Polymerase chain reactions are typically carried out in special reaction receptacles. In order to provide robust, reliable, and highly accurate results for the amplification of nucleic acids it is important to avoid contamination of the reaction region. PCR can amplify a single molecule over a billion-fold. Thus, even minuscule amounts of a contaminant can be amplified and lead to a false positive result. Such contaminants are often products from previous PCR amplifications and are called carry-over contaminations. Besides the prevention of carry-over contaminations during the filling of the reaction regions it is particularly important that the reaction region is sealed against contaminants while the reaction is carried out. This is particularly challenging in applications where more than one reaction region is filled simultaneously using a common fluidic channel. Such applications often make use of miniaturized devices carrying multiple reaction regions for higher throughput with reduced reaction volumes leading to even increased technical requirements to reduce the risk of contamination.

Micro-fluidics is the science of designing, manufacturing, and formulating devices and processes that deal with volumes of fluid in the nano- or picoliter range. Micro-fluidics hardware requires construction and design that differs from macroscale hardware. It is not generally possible to scale conventional devices down and then expect them to work in micro-fluidics applications as system behavior is dramatically altered. Capillary action changes the way in which fluids pass through microscale-diameter tubes, as compared with macroscale channels. In addition, there are unknown factors involved, especially concerning microscale heat transfer and mass transfer. Micro-fluidic systems have diverse and widespread potential applications in health care, e.g., blood-cell-separation, biochemical assays, chemical synthesis, genetic analysis, drug screening, and electrochromatography.

In order to tackle the problem of contamination particular micro-fluidic valves have been developed that allow filling and maintaining a liquid sample in a reaction region and beyond that reduce the risk of cross-contamination when the reaction takes place. Herein, the valves hermetically seal each individual reaction chamber. This is important, particularly in an array format, where a sample or more than one sample is tested against several distinct parameters. As cross-reactions could lead to false positive results the main task is to avoid such cross-reactions. Thus, in many applications valves are used on the array device to prevent the carry-over of reaction chamber specific reagents.

Several types of valves are known in the art, wherein two major types can be distinguished commonly referred to as once-close valves and On/Off valves. The once close valves are open in the ground state and may be closed only once. After closure the valves may not be reopened. The On/Off type valves may be opened and closed several times commonly using an external actuator.

US 20050072946 discloses micro-fluidic valves using multilayer soft lithography. Such valves feature elastomer membrane portions of constant thickness, allowing the membranes to experience similar resistance to an applied pressure across their entire width. Such on-off valves fabricated with deflectable membranes can have extremely low actuation pressures, and can be used to implement active functions such as pumps and mixers in integrated micro-fluidic chips. However, such devices with an integrated soft membrane are manufactured with two-component production techniques. The first component usually is a harder polymeric material, such as polypropylene (PP) or polymethylmethacrylate (PMMA) and the second component is a soft material, such as a thermoplastic elastomer (TPE). Those two-component techniques are complex and costly and the time to produce one device is increased drastically compared to one-component techniques. Additionally, the elastomeric valves have to be three dimensionally structured. The device has to be built up in several layers, each layer having a particular function (e.g., a fluidic layer, a valving layer, etc.). The layer for the actuation of the valves is located geometrically above the fluidic layer. Such multilayer processes even increase the cost of goods and the complexity of the device.

Furthermore, valves are known in the art which inhibit the discharge of fluid into or from reaction regions using peltier-actuated micro valves (Richard P. Welle and Brian S. Hardy, 24th International Conference on Thermoelectrics (ICT), 2005, pages 343-346). A peltier element is located close to or below a fluidic channel network. By cooling the fluid in the channel leading to or from the reaction chamber using a peltier element the fluid is frozen resulting in an ice plug in the channel. This ice plug blocks the channel and diffusion is hindered. When the peltier element is switched off, the ice plug melts and the channel is reopened. Liquids may now flow through the channel and diffusion may occur again. This type of valve is also classified as an On/Off valve as several freeze and thaw cycles may be performed. However, such peltier-actuated valves have many drawbacks. One peltier element for each valve is needed in very close proximity. The peltier element is size limiting and therefore such valves can not be applied to micro-fluidic devices with a high density of reaction chambers and channels. Furthermore, each peltier element has to be electronically accessed and regulated requiring space for wires and a complicated controller. Beyond that, such valves may not be used in thermal cycling applications, because in the closed state the liquid in the channel needs to be frozen in close proximity to the reaction chamber, where thermal cycling is applied at temperatures between 50 and 90°C. The temperature gradient between the valve and the reaction chamber would influence both, the freezing and the heating process and both processes would need more energy. This effect limits the speed and efficiency for fast thermal cycling. Beyond that freezing also results in a change of volume of the liquid and thereby in an induced stress on the device and its materials.

Passive valves based on capillarity making use of different moistening of a capillary compared to the opening of said capillary into a reaction region are known as capillary-driven stop valves or capillary burst valves and are described in Duffy et al, 1999, 71, 4669-4678, Analytical Chemistry. Such passive valves are based on wettability energies. The force that is needed to push the meniscus out of a fine capillary into a bigger chamber is used as a valve. This pressure - defined as force per area - is normally significantly lower than 1.4 bar, which is the pressure produced in a closed PCR reaction chamber during thermal cycling. Therefore, a passive valve is not strong enough to withstand the pressure produced by the heating of the PCR reaction. The pressure leads to the wetting of the bigger chamber, and therefore the valve would be open, when it should be closed.

In summary all these valves described above have the common disadvantage that they merely are miniaturizations of macroscopic valves partially adopted to micro-fluidic applications and, therefore, do not fulfill all requirements and demands necessary for micro-fluidic applications. Such valves have in common, that an external actuation such as electric current, air-pressure or temperature is needed. Yet, the superstructural parts such as pipes and wires required for supplying the external actuations are commonly very space consuming and cost-intensive. Particularly, for integrated chip applications only limited space is available for such valves. Furthermore, especially in nucleic acid analysis on a micro-fluidic chip the addition of another layer carrying the valve actuation is disadvantageous as the thermal mass of the micro-fluidic chip should be as small as possible in order to allow for a fast and efficient heat transfer particularly when performing amplification reactions.

Furthermore, also micro-fluidic concepts not being a miniaturization of a macroscopic valve do not fulfill all requirements for higher through-put micro-fluidic applications particularly with regard to the costs. Examples for such valves are self-actuated thermo-responsive hydrogel valves for Lab-on-a-Chip applications as described in JingWang et al, Biomedical Microdevices 7:4, 313-322, 2005. Such valves make use of the fact that polymeric N-isoproylacrylamide shows a temperature sensitive behavior. The polymeric material is build up from a network with a pore structure. The size of the pores depends on the temperature. When such a material is used to function as a valve, the material is filled inside a chamber of a micro-fluidic network allowing or blocking the flow of the fluid depending on the temperature. Yet, the production of devices carrying hydrogel valves is complex and costly as hydrogel has to be subjected to in-situ polymerization or has to be incorporated into a foil. The hydrogel material is in direct contact with the process fluid and due to its pore structure provides an immense surface per volume. In most applications this is not favored as the big surface provides more space for adsorption of proteins, DNA or other chemical components as those substances could be bound to the surface depending on the surface chemistry. However, those substances are needed inside the reaction chamber and should not be adsorbed by the hydrogel. Thus, the performance of the assay/test may be compromised.

Beyond that, other valves make use of expandable micro spheres having a soft component shell surrounding a gas core (P. Griss, H. Andersson and G. Stemme, Lab Chip, 2002, 2:117-120, "Expandable microspheres for the handling of liquids"). Upon increase of the temperature the micro spheres expand and thereby close the channel. The shell of the beads soften at a certain elevated temperature. After the softening of the shell, the encapsulated gas can expand and the micro-particle expands to a size that several times exceeds its original volume. The expansion is irreversible and the micro sphere does not shrink again when the temperature is lowered. Thus, such valves are classified as once close valves. However, the production of such devices comprising the micro spheres is very challenging as the micro spheres have to be incorporated and deposited into the micro-fluidic device at adequate positions. The production of such a micro sphere valve is difficult, because the temperature has to be held below the expansion point of the micro spheres while producing the device.

In summary, valves known in the art are either miniaturizations of macroscopic valves adopted to micro-fluidic applications and, therefore, do not fulfill all requirements for micro-fluidic applications as external actuation is needed to close the valve or micro-fluidic concepts for which the main disadvantage is that complex materials have to be used leading to intricate production processes when these complex materials are showing instability towards treatment with heat or liquid leading to high costs of the micro-fluidic device. Thus, there is a need to provide a micro-fluidic valve for low cost micro-fluidic devices without the need for complex external actuation and for a complex manufacturing process.

### Brief description of the drawings

Preferred embodiments of the invention are described below, by way of example, with reference to the accompanying drawings, wherein:

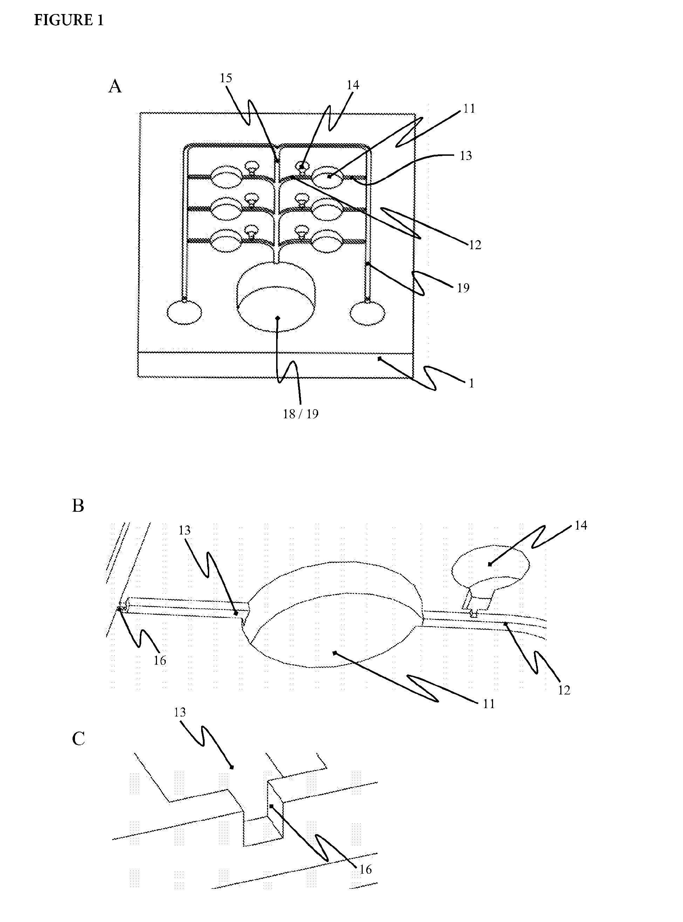

Figure 1 shows a micro-fluidic device (1) comprising a main channel (15) and several inlet channels (12) diverting from the main channel, each inlet channel leading to a reaction chamber (11) and having a dead end branch (14) containing gas that upon application of heat may seal the inlet channel (A). Figure 1 (B) shows in detail a particular embodiment of an inlet channel (12) having a dead end branch (14) leading to one reaction chamber (11) having an outlet channel (13) comprising a hydrophobic modified geometrical valve (16), while Figure 1 (C) in detail shows the geometrical valve (16) to prevent outflow from the reaction chamber (11).

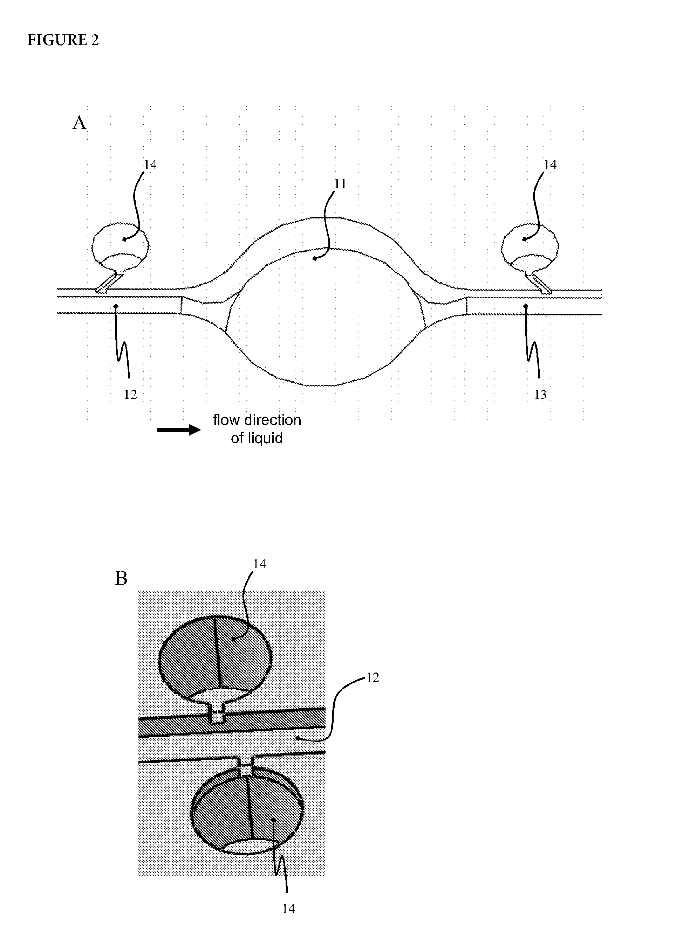

Figure 2 displays certain embodiments of the micro-fluidic temperature driven valve according to the invention having an inlet channel (12) and a dead end branch (14), wherein the angle between the dead end branch and the inlet channel is below 90° towards the flow direction of the liquid sample during the filling of said reaction chamber (A) or wherein the inlet channel contains two dead end branches and wherein the openings of the dead end branches into the inlet channel are positioned substantially opposite to another (B).

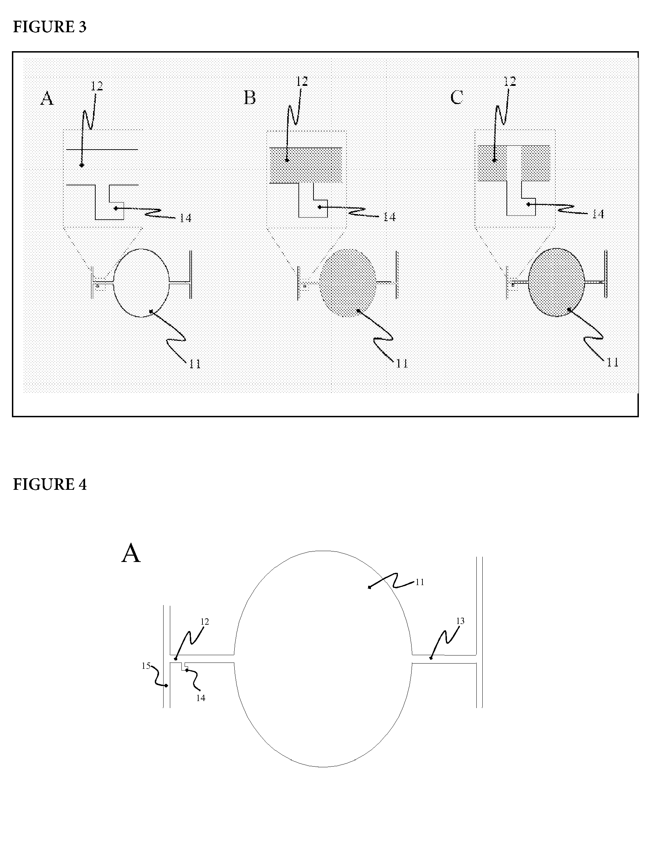

Figure 3 displays the functionality of the micro-fluidic temperature driven valve according to the invention. The enlarged section shows the inlet channel (12) leading to the reaction chamber (11) and the dead end branch filled with a gas (14) when no liquid is present (A), when the inlet channel and the reaction chamber are filled with liquid (B) and when heat is applied to at least the dead end branch leading to the expansion of the gas while the reaction chamber and the inlet channel are filled with liquid (C).

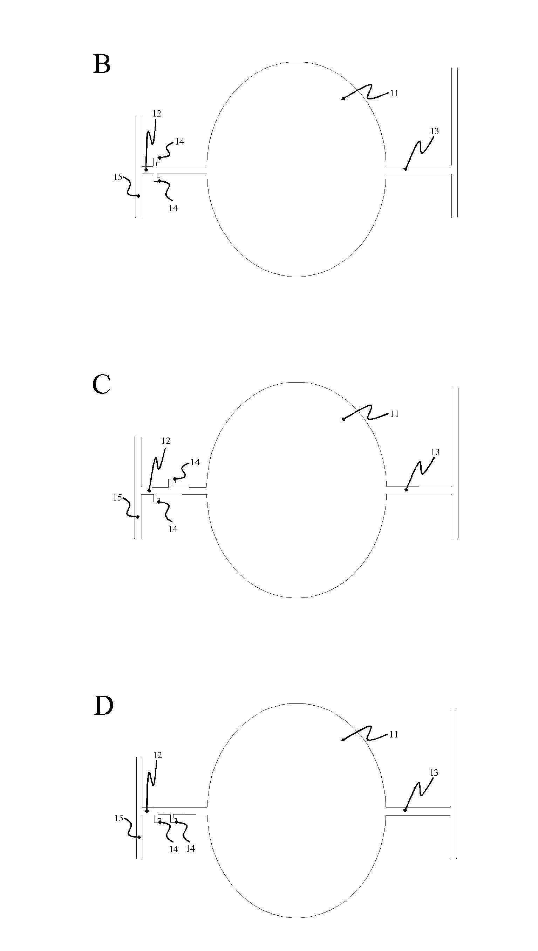

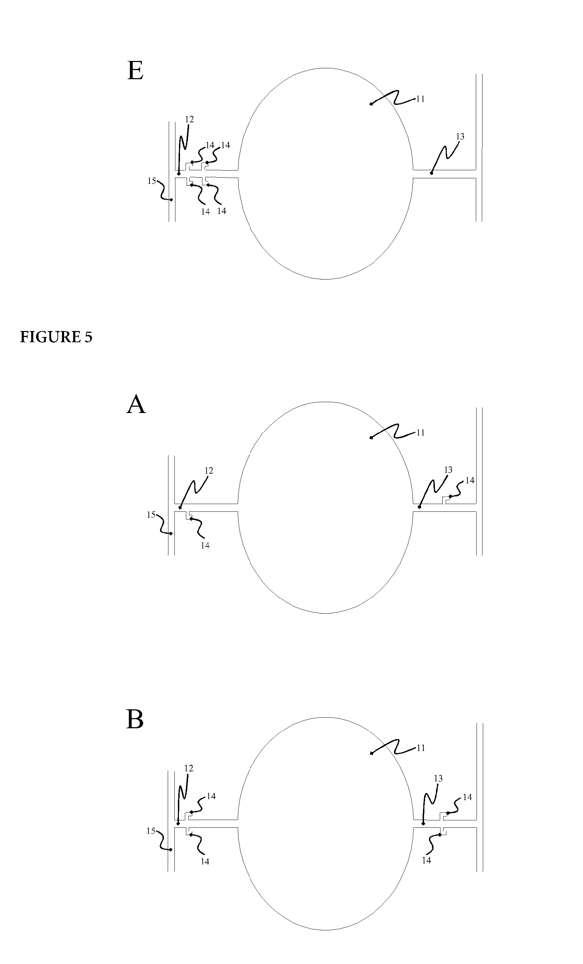

Figure 4 shows an enlarged section of a micro-fluidic device particularly showing a portion of the main channel (15) and the junction of the inlet channel (12) leading to the reaction chamber (11). Several embodiments and arrangements of the dead end branches (14) on the inlet channel (12) are displayed.
Figure 5 shows an enlarged section of a micro-fluidic device particularly showing a portion of the main channel (15) and the junction of the inlet channel (12) leading to the reaction chamber (11). Several exemplary embodiments and arrangements of the dead end branches (14) on the inlet (12) and outlet (13) channel are displayed.

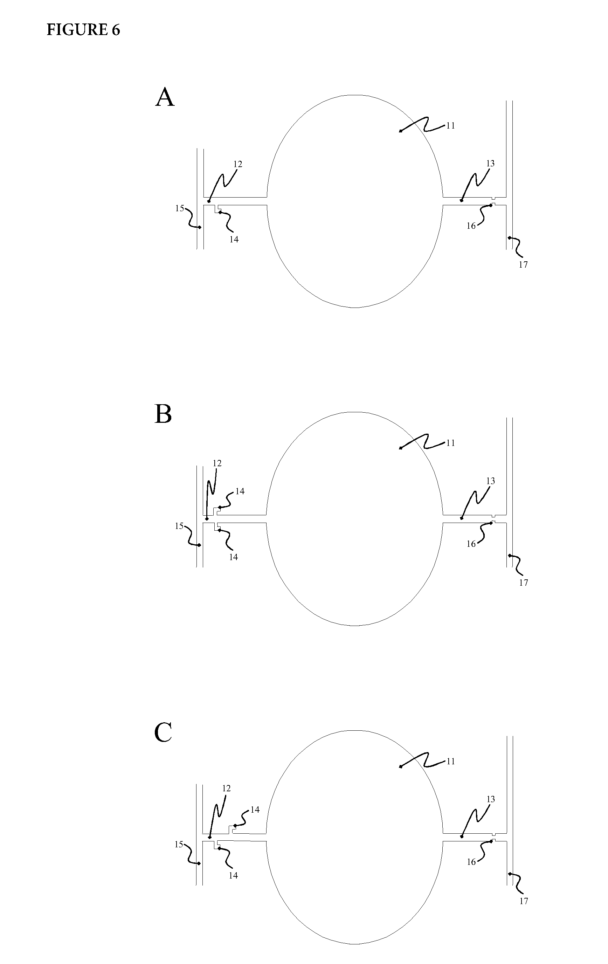

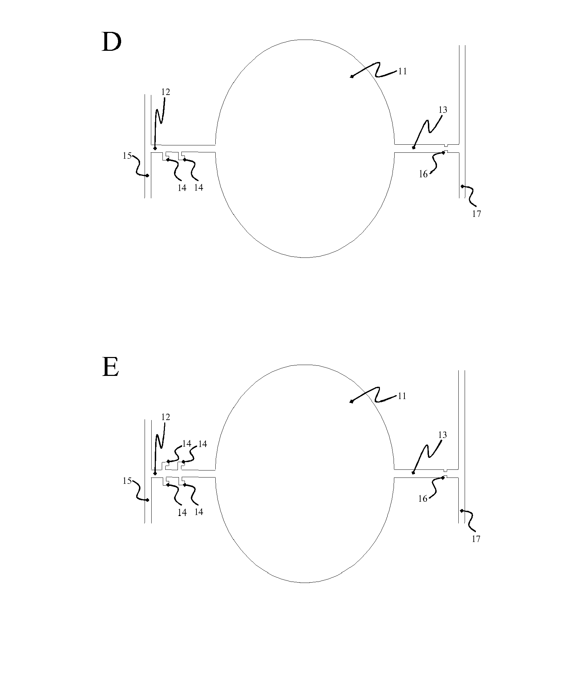

Figure 6 shows an enlarged section of a micro-fluidic device particularly showing a portion of the main channel (15) and the junction of the inlet channel (12) leading to the reaction chamber (11). The outlet channel (13) further comprises a geometric valve (16). Several embodiments and arrangements of the dead end branches (14) on the inlet channel (12) are displayed.

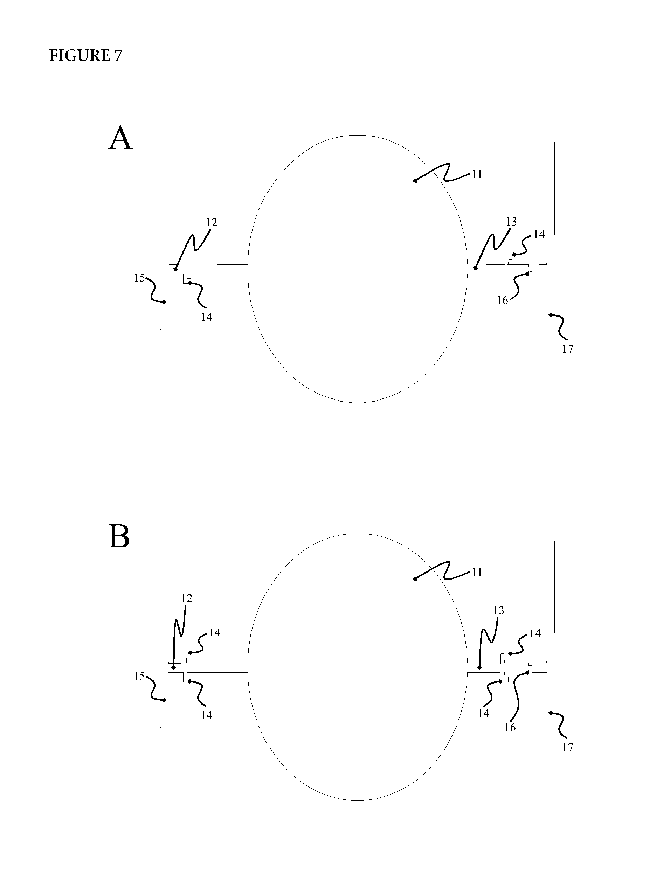

Figure 7 shows an enlarged section of a micro-fluidic device particularly showing a portion of the main channel (15) and the junction of the inlet channel (12) leading to the reaction chamber (11). The outlet channel (13) further comprises a geometric valve (16). Several exemplary embodiments and arrangements of the dead end branches (14) on the inlet (12) and outlet (13) channel are displayed.

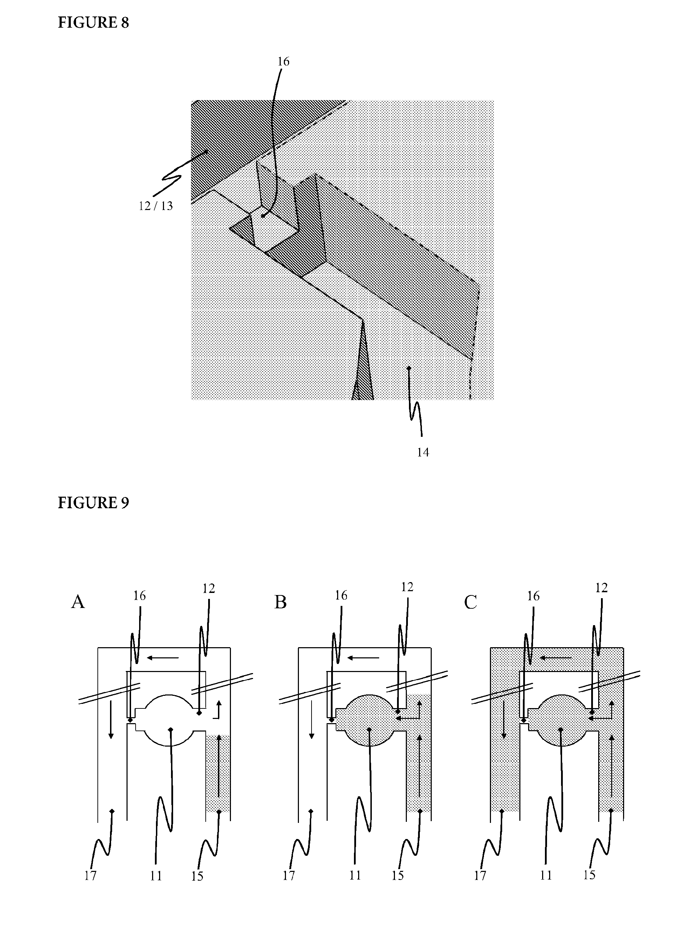

Figure 8 displays a particular embodiment of the dead end branch (14) having a geometric valve (16).
Figure 9 shows the filling of a reaction chamber (11) and a collector channel (17) in an embodiment comprising a geometric valve (16) in the outlet channel (13).

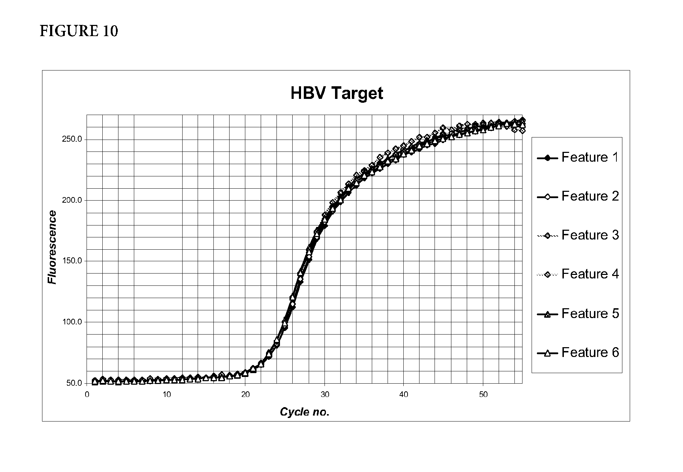

Figure 10 represents a cycle number vs. fluorescence graph when analyzing one human plasma sample of an HBV-positive patient in six parallel reactions.

### Summary of the invention

A first subject of the invention is a micro-fluidic device for the use in an apparatus for analyzing a liquid sample by nucleic acid amplification at least comprising a reaction chamber having an inlet channel suitable for filling said reaction chamber with said liquid sample and an outlet suitable for the discharge of fluid from said reaction chamber, wherein said outlet may be closed after the reaction chamber is filled with said liquid sample and wherein said inlet channel further contains at least one dead end branch, said branch having no outlet, containing a gas and being dimensioned to at least contain the amount of gas sufficient to seal said inlet channel when said gas expands from said branch while at least said branch is heated.

A second subject of the invention is an apparatus for analyzing a liquid sample by nucleic acid amplification at least comprising
- a micro fluidic device according to the invention,
- a device for monitoring the nucleic acid amplification reaction, and
- a heating device at least covering said at least one dead end branch of said micro-fluidic device.

A third subject of the invention is a method for analyzing a liquid sample by nucleic acid amplification at least comprising
- providing a liquid sample in the reaction chamber of a micro-fluidic device according to the invention via the inlet channel of said device,
- applying heat to at least the dead end branch of said device by a heating device whereby the gas within the dead end branch expands and thereby seals the inlet channel of said device,
- amplifying nucleic acids in said liquid sample, and
- monitoring the amplification reaction.

A fourth subject of the invention is a method for amplifying nucleic acids in a liquid sample at least comprising
- providing a liquid sample in the reaction chamber of a micro-fluidic device according to the invention via the inlet channel of said device,
- applying heat to at least the dead end branch of said device by a heating device whereby the gas within the dead end branch expands and thereby seals the inlet channel of said device, and
- amplifying nucleic acids in said liquid sample.

A fifth subject of the invention is the use of a dead end branch compartment containing a defined volume of gas for closing a channel containing a liquid, wherein said gas expands from said dead end branch compartment into said channel, thereby dividing said liquid into two portions and closing said channel when heat is applied to at least said dead end branch compartment.

### Detailed description of the invention

The present invention relates to micro-fluidic temperature driven valve that may be implemented on a micro-fluidic device or a micro-fluidic chip. The use of such a valve in a micro-fluidic device is advantageous as it allows the device not to be made up from multiple layers and to be manufactured in a one-compound process, which is cost and time saving. Such a micro-fluidic device or a micro-fluidic chip can be used in an apparatus for analyzing a liquid sample. As used herein, the term micro-fluidic device describes a device having micro-structured parts, such as channels, channel networks or reaction chambers. A micro-fluidic device may be part of an instrument (multiple usage) or a disposable (one time usage).

In one embodiment of the invention a micro-fluidic device for the use in an apparatus for analyzing a liquid sample by nucleic acid amplification at least comprises a reaction chamber having an inlet channel suitable for filling the reaction chamber with the liquid sample and an outlet suitable for the discharge of fluid from the reaction chamber. The outlet may be closed after the reaction chamber is filled with the liquid sample and the inlet channel further contains at least one dead end branch. The dead end branch does not have an outlet and contains a gas. Furthermore, the dead end branch is dimensioned to at least contain the amount of gas sufficient to seal the inlet channel when the gas expands from the branch while at least the branch is heated.

The reaction chamber is the area on the micro-fluidic device where the desired reaction between an analyte and the reagents takes place. Furthermore, in certain aspects the reaction chamber may also be the location for the detection of the reaction, when the reaction is monitored. The reaction chamber is filled with a liquid that may in certain aspect contain the analyte via an inlet channel, which is part of the fluidic network. In certain aspects the inlet channel may be reversibly or irreversible closed by the use of a plug or a valve (e.g., a micro-fluidic temperature driven valve according to the invention) after the reaction chamber is filled with the liquid, by gluing, thermal and / or mechanical force or non-miscible liquids having a high boiling temperature (e.g., mineral oil, wax, halogenated hydrocarbons) depending on the type of inlet channel and the type of application the device is used for.

The outlet also is part of the fluidic network used as an exhaust for gas displaced from the fluidic network and the reaction chamber while the reaction chamber is filled with a liquid. The outlet may be a channel, a ventilation hole or a permeable or semipermeable membrane, which in certain aspects may be coated with or made up from a hydrophobic compound. In certain aspects the outlet may be reversibly or irreversible closed by the use of a plug or a valve (e.g., a micro-fluidic temperature driven valve according to the invention) after the reaction chamber is filled with the liquid, by gluing, thermal and / or mechanical force or non-miscible liquids having a high boiling temperature (e.g., mineral oil, wax, halogenated hydrocarbons) depending on the type of outlet and the type of application the device is used for.

One of the main features of the micro-fluidic valve is the dead end branch, which is also part of the fluidic network. The dead end branch is filled with gas (air, sterile air, or inert gases such as nitrogen, argon, etc.) and diverts from a channel. When the micro-fluidic device is filled with liquid the dead end branch remains filled with the gas because the dead end branch does not have an additional outlet.

The dead end branch can have several geometric shapes; preferably the connection to the dead end branch is a narrow channel, narrower than the inlet channel. Behind the narrow channel a gas volume is located, at least big enough to expand into the channel and divide the fluid into two portions. This bigger volume can be shaped circular, rectangular, triangular or in any other shape favorable for a high packing density or for manufacturing.

In certain embodiments of the micro-fluidic device the dead end branch is substantially perpendicular to said inlet channel. In another embodiment of the micro-fluidic device the angle between the outlet portion of the dead end branch and the inlet channel is below 90° in flow direction of the liquid sample during the filling of the reaction chamber. In such an embodiment the gas expands towards the reaction chamber when heat is applied to at least the dead end branch. This embodiment is advantageous as the risk is reduced that the gas contained in the dead end branch is squeezed out by the liquid and that the dead end branch is filled with liquid during the filling of the reaction chamber.

However, in certain aspects it may also be advantageous that the angle between the outlet portion of the dead end branch and the inlet channel is above 90° in flow direction of the liquid sample during the filling of the reaction chamber. Herein, the gas expands away from the reaction chamber when heat is applied to at least the dead end branch preventing accidental expansion of the gas into the reaction chamber. This is particularly useful for devices having a high density of reaction chambers and / or only short inlet channels in relation to the amount of gas provided in the dead end branch.

Furthermore, if a micro-fluidic temperature driven valve comprising a dead end branch is used for closing the outlet channel it may in certain aspects be advantageous that the dead end branch is substantially perpendicular to said outlet channel or that the angle between the outlet portion of the dead end branch and the outlet channel is below 90° in flow direction of the liquid sample during the filling of the reaction chamber. These embodiments ensure that the gas expands away from the reaction chamber when heat is applied to at least the dead end branch and thereby prevent the accidental expansion of the gas into the reaction chamber.

An exemplary embodiment is depicted in Figure 2 (A). In this embodiment the diameter of the outlet portions of the dead end branches (14) are smaller than the diameter of the inlet channel (12) and the outlet channel (13), respectively, in order to prevent unwanted filling of the dead end branch compartment. The angle between the outlet portion of the dead end branch (14) and the inlet channel (12) is approximately 130° while the angle between the outlet portion of the dead end branch (14) and the outlet channel (13) is approximately 50° in flow direction of the liquid sample during the filling of the reaction chamber. This assembly ensures that the gas expanding from both dead end branches (14) spreads into the respective channel moving away from the reaction chamber (11) when heat is applied to at least the dead end branches (14). Thereby, the content of the reaction chamber (11) is sealed and unwanted expansion of the gas into the reaction chamber (11) is prevented.

In certain embodiments of the micro-fluidic device the inner wall of the inlet channel at least at the junction between the dead end branch and the inlet channel is covered with a hydrophobic coating. This is advantageous because the expanded gas is stabilized during the expansion phase and afterwards as for energetic reasons air accumulates at hydrophobic surfaces. This behavior minimizes the risk that the air moves away from the micro-fluidic valve towards the reaction chamber, which would result in a loss of valving function. A hydrophobic coating is a coating with a low surface tension showing a contact angle bigger than 90° with water as test fluid. Examples are Teflon (PTFE) coatings, hydrocarbons, or fluorocarbons, titan coatings, parylene and silanized glass surfaces.

In certain embodiments the micro-fluidic device comprises a plurality of reaction chambers in order to allow for the parallel analysis of more than one liquid sample on one device. In certain aspects each inlet channel is on the one end linked to one reaction chamber and on the other end linked to a main channel. The main channel is useful for the distribution of the sample and for filling each of the plurality of reaction chambers with said liquid sample. This enables that several reaction chambers are filled with the same liquid sample at substantially the same time. The sample is provided on a particular filling position on the device. The liquid sample is than transported along the main channel to the inlet channels and to the reaction chambers preferably via capillary force. In other embodiments the reaction chambers may be filled via low-pressure, highpressure or by rotating the device using a centrifuge. In such embodiments the same sample may be subjected to the same amplification and / or detection reaction in several reaction chambers in parallel in order to provide a multitude of results for the same experiment when the same amplification mixture is provided in all reaction chambers or the same sample may be subjected to the various amplification and / or detection reactions in several reaction chambers when different amplification mixtures are provided in the reaction chambers. Such amplification and / or detection reactions are for example polymerase chain reaction, ligase chain reaction, nucleic acid sequence-based amplification, rolling circle amplification, strand-displacement amplification or transcription-mediated amplification.

In Figure 1 (A) an exemplary embodiment of a micro-fluidic device (1) comprising a main channel (15) and several inlet channels (12) diverting from the main channel, each inlet channel leading to a reaction chamber (11) and having a dead end branch (14) containing gas that upon application of heat may seal the inlet channel is depicted. The sample (e.g., blood plasma) is provided on the device (1) into the sample inlet port (18) and is transported to the reaction chambers (11) via micro-fluidic structures (e.g., the main channel (15)) either by applying a pressure to the fluidic network, by centrifugation of the device or by capillary force. The main channel (15) comprises several junctions leading the liquid sample via the inlet channels (12) into the reaction chambers (11). Each inlet channel (12) comprises a dead end branch (14) that functions as a micro-fluidic valve. The air filling the dead end branch (14) is not displaced by the liquid sample as no further outlet is present in the dead end branch (14). Each reaction chamber (11) comprises an outlet channel (13) through which the air present in the reaction chamber (11) is discharged when the air is displaced by the sample liquid. After the final inlet channel (12) is branched off from the main channel the main channel (15) bends and is guided in such a manner that the outlet channels (13) disembogue into the main channel (15). This section of the main channel is called collector channel (17). Thus, the gas discharged from the reaction chambers (11) via the outlet channels (13) is lead off through the collector channel (17). After the filling of the reaction chambers (11) is completed the device should be closed using a closing means, e.g., a cap, a soft plug, by gluing, or by a tape. When thermal cycles are applied to the device the gas trapped in the dead end branches (14) expands at higher temperatures into the inlet channels (12) and thereby segments the channel into two independent sections with a gas volume in-between the two liquid filled sections. Due to this expansion diffusion from one reaction chamber (11) into another reaction chamber (11) is prevented. After the thermocycling process is finished, the chip is cooled down and the gas volume shrinks, resulting in an opening of the valves. Therefore, means for detection must be applied at elevated temperatures or in a real-time as long the valves are closed.

In another preferred embodiment as shown in detail in Figure 1 (B) and (C) as well as in Figure 6 (A) the outlet channels (13) of the micro-fluidic device each comprise a hydrophobic modified geometrical valve (16). The geometrical valves as in detail shown in Figure 1 (C) are trapping air in the small narrowed section as this section is hydrophobic. When the collector channel (17) is filled with liquid the geometrical valves (16) are closed form the inner side by the liquid sample within the reaction chamber and the outlet channel and from the outer side by liquid sample in the collector channel (17). Furthermore, the gas trapped in the small narrowed section of the hydrophobic modified geometrical valve (16) prevents diffusion of molecules from the reaction chamber (11) to the collector channel (17).

In certain aspects different reaction mixtures comprising primers, probes, and / or buffer solutions are provided in the different reaction chambers (11) allowing the analysis of one sample for the presence of several distinct nucleic acids. In another aspect the different reaction chambers (11) contain the same reaction mixture comprising primers, probes, and / or buffer solutions allowing the analysis of one sample for one parameter in several independent reactions.

The main advantage for the use of micro-fluidic temperature driven valves on a micro-fluidic device in amplification and / or detection reactions is that the application of heat during the reaction can be used as the actuation to close the valve by expansion of the gas provided in the dead end branch and thereby closing the inlet channel and sealing the liquid sample within the reaction chamber or the reaction chambers. Thus, when using such micro-fluidic devices in amplification and / or detection reactions no additional actuation for sealing the reaction chamber (e.g., an additional heater and / or cooler or a device for mechanically sealing the reaction chambers) has to be provided. Furthermore, no additional superstructural parts such as pipes and wires required for supplying external actuation are required in such a setup leading to reduced complexity of the device. Instead of complex multi-layer structures comprising the superstructural parts and the channels and reaction chambers the micro-fluidic devices according to the invention containing the micro-fluidic temperature driven valves may be produced in one layer with a comparable simple geometry leading to reduced fabrication costs.

The detailed functionality of a micro-fluidic temperature driven valve according to the invention is demonstrated in Figure 3. The enlarged section shows the inlet channel (12) leading to the reaction chamber (11) and the dead end branch filled with a gas (14) when no liquid is present (A). A liquid sample is provided to the reaction chamber (11) of the micro-fluidic device via the inlet channel (12). The inlet channel (12) comprises at least one dead end branch (14). The dead end branch (14) does not comprise an additional outlet and therefore, the gas contained in the dead end branch is not replaced by the liquid sample when the sample flows through the inlet channel (12) towards the reaction chamber (11). Thus, when the reaction chamber (11) and the inlet channel (12) are filled with liquid a defined amount of gas is enclosed in the dead end branch (14). This is displayed in Figure 3 (B). The size of the dead end branch (14) and thereby the amount of gas enclosed is selected depending on the diameter of the inlet channel (12) to be closed and the amount of heat applied to the dead end branch. As can be seen in Figure 3 (C) the gas expands from the dead end branch (14) into the inlet channel (12) filled with liquid according to the ideal gas law and depending on the heat capacity of the gas when heat is applied to at least the dead end branch (14). The expansion of the gas on the one side and the presence of a geometric valve (16) within the outlet channel (13) only allowing gas and hampering liquid to be removed from the reaction chamber (11) lead to an interruption in the liquid communication and to a segmentation of the liquid within the reaction chamber (11). Thus, the gas expanded from the dead end branch (14) acts as a diffusion barrier, decouples the reaction chamber (11) from the inlet channel (12) and therefore while heat is applied to at least the dead end branch (14) no substance can be exchanged between the reaction chamber (11) and the inlet channel (12).

While heat is applied the micro-fluidic device must be closed to prevent evaporation of the liquid sample. An open device would be empty after thermocycling, not allowing a successful amplification. The closing can be conducted for example through a cap, tape, soft plug or glue that is polymerized instantly inside the ports, via UV or fast reaction (2 component systems).

In order to allow the described expansion of the gas from the dead end branch into the inlet channel in a closed system a compensation volume must be present. This compensation volume permits the expansion of the gas from the dead end branch while the compensation volume itself shrinks. The compensation volume also has to be filled with a gas because liquids are nearly incompressible. Without such a compensation volume the pressure in the closed system would arise but an expansion of the gas from the dead end branch into the inlet channel would not occur. The compensation volume ideally is not heated while thermal cycles are applied, otherwise the pressure would equally rise in both, the compensation volume and the dead end branch valve. In case that the compensation volume is also heated the expansion of the gas from the dead end branch is made possible by increasing the thickness and / or height of the compensation volume compartment compared to the height of the dead end branch compartment. Thereby, the temperature gradient across the compensation volume permits the expansion of the gas from the dead end branch compartment. As an example an empty filling port which is closed after filling the device and not heated while thermal cycles are applied may be used as the compensation volume (19) as depicted in Figure 1 (A).

In other embodiments of the micro-fluidic device as exemplary shown in Figure 2 (B) the inlet channel (12) contains at least two dead end branches (14) wherein the openings of said dead end branches (14) into the inlet channel (12) are positioned substantially opposite to another. In yet other embodiments the dead end braches may be adjacent to another. A first advantage of such an embodiment is the redundancy. Thus, if accidentally one dead end branch is filled with fluid a second valve may close the channel. A second advantage of such an embodiment is the packing density. The gas volume may be divided into two portions with one portion on each side of the inlet channel resulting in a more compact format of the valve and therefore of the device compared to embodiments having the whole gas volume in one dead end branch on one side of the inlet channel.

Various embodiments of the dead end branches (14) forming the micro-fluidic temperature driven valve can be envisaged. Exemplary embodiments are depicted in Figure 4 (B) - (E). The dead end branches (14) may be positioned opposite another (B), opposite and staggered (C), adjacent to another (D) or multiple dead end branches may be present (E). Furthermore, as shown in Figure 5 one or multiple dead end branches may also be present in the outlet channel (13) also allowing the outlet channel (13) to be closed while the micro-fluidic device is heated. The amount of gas provided in the dead end branches may be selected in such a way that each dead end branch (14) contains sufficient gas for closing the inlet channel (12) when heat is applied to the device or such that the amount of gas in both or in the multiple dead end branches (14) together is sufficient for closing the inlet channel (12) when heat is applied to the device. The first embodiment is advantageous because of the redundancy. Thus, if accidentally one dead end branch is filled with fluid a second valve may close the channel. The latter embodiment is advantageous as it allows for a high packing density on the device.

In yet other embodiments of the micro-fluidic device the outlet channel (13) comprises a geometric valve (16) and / or at least one dead end branch (14) and / or a hydrophobic coating. Such embodiments are shown in Figure 6 and 7. An embodiment of a micro-fluidic device having one dead end branch (14) branching from the inlet channel (12) that guides liquid to the reaction chamber (11) and having a geometrical valve (16) at the end of the outlet channel (13) capable of deducing gas dislodging from the reaction chamber (11) into the collector channel (17) when the reaction chamber (11) is filled with the liquid sample is depicted in Figure 6 (A). Furthermore, other exemplary embodiments having at least two dead end branches (14) branching from the inlet channel (12) are shown in Figure 6 (B) - (E), wherein the dead end branches (14) are positioned opposite another (B), opposite and staggered (C), adjacent to another (D) or multiple dead end branches may be present (E). Moreover, the outlet channel (13) may further contain one or multiple dead end branches also allowing the outlet channel (13) to be closed while the micro-fluidic device is heated. Such embodiments are shown in Figure 7.

An exemplary geometric valve is depicted in Figure 1 (C). The geometric valve consists of a small channel with a small diameter (e.g. capillary) and is located between two bigger chambers or channels. Preferably, the small channel is positioned in the middle of the wall located between the two bigger chambers or channels and does not share any side wall sections with the chambers or channels. The continuance of the small channel forming the geometric valve should be constructed in such a way that on each side there is a 90° angle between the bigger chamber or channel and the small channel. Due to manufacturing issues, it is difficult to produce such a valve. Thus, usually these geometric valves are simplified by means of sharing one wall with the chamber or channel (e.g., one side wall of the channel is directly continued into the chamber or channel without a 90° angle). Additionally, as shown in Figure 8 the dead end branch (14) may also contain a geometric valve (16), which preferably is hydrophobic, at the intersection between the channel (12/13) and the outlet of the dead end branch (14). Such an embodiment is advantageous as the geometric valve (16) functions as an additional means to avoid the accidental filling of the dead end branch (14) with liquid while filling the device.

In certain aspect the geometric valve is hydrophobically treated or the material intrinsically is hydrophobic. Such an embodiment is shown in Figure 9. The behavior of the geometric valve having a hydrophobic surface differs from the geometric valve having a hydrophilic surface in that the filling (A) stops before the narrow part of the valve (B) when the micro-fluidic device is filled with a water-based liquid. Due to this behavior, a certain amount of gas is trapped in the narrow part of the geometric valve (16). In combination with a collector channel (17) the gas is trapped from both sides and surrounded with liquid from both sides (C). The two liquids are segmented by the gas trapped in the narrow part of the geometric valve and no diffusion between the two liquids may occur. No heating is required for this type of valve, but if the geometric valve is heated the gas trapped expands without compromising the functionality. The hydrophobic modified geometrical valve (16) in connection with a collector channel (17) may be used as a particular outlet of the reaction chamber in a device according to the invention. The geometric valve (16) alone and in combination with the collector channel (17) may be used instead or in addition to a valve (e.g., a dead end branch valve) for sealing the outlet (13) in applications where a valve at the outlet is deemed necessary.

In another embodiment the invention provides an apparatus for analyzing a liquid sample by nucleic acid amplification at least comprising a micro fluidic device according to the invention, a device for monitoring the nucleic acid amplification reaction, and a heating device at least covering said at least one dead end branch. In certain embodiments the heating device further covers said reaction chamber. This embodiment is advantageous as closing the micro-fluidic temperature driven valve coincides with the amplification of the nucleic acids. In certain aspects the apparatus further comprises a heat control, which allows the application of heat in order to open and close the micro-fluidic valve in a controlled manner and / or the application of heat or heat cycles in order to perform the amplification reaction in a controlled manner. In particular applications (e.g., PCR applications) it is useful that the heating device is capable of performing thermal profiles. In certain applications the micro-fluidic device must be closed while heat is applied to prevent evaporation of the liquid sample. The closing of the micro-fluidic device can be conducted, e.g., through a cap, tape, soft plug or glue that is polymerized instantly inside the ports, via UV or fast reaction (2 component systems).

In another embodiment the invention provides a method for analyzing a liquid sample by nucleic acid amplification at least comprising providing a liquid sample in the reaction chamber of a micro-fluidic device according to the invention via the inlet channel of said device. In the next step heat is applied to at least the dead end branch of the device by a heating device whereby the gas within the dead end branch expands and thereby seals the inlet channel of the device. Subsequently, nucleic acids in the liquid sample are amplified, and the amplification reaction is monitored.

In yet another embodiment the invention provides method for amplifying nucleic acids in a liquid sample at least comprising providing a liquid sample in the reaction chamber of a micro-fluidic device according to the invention via the inlet channel of the device, applying heat to at least the dead end branch of the device by a heating device whereby the gas within the dead end branch expands and thereby seals the inlet channel of said device, and amplifying nucleic acids in the liquid sample.

Both of these methods may in certain aspect further comprise closing the inlet and / or the outlet channel after the reaction chamber is filled with the liquid sample. Furthermore, in these methods the amplification of nucleic acids may be carried out using amplification reactions, for example such as polymerase chain reaction, ligase chain reaction, nucleic acid sequence-based amplification, rolling circle amplification, strand-displacement amplification or transcription-mediated amplification.

### Example

Human plasma of an HBV-positive patient collected in the anticoagulant EDTA is tested against the Hepatitis B Virus (HBV) using the COBAS^{®} AmpliPrep/COBAS^{®} TaqMan^{®} HBV Test (Roche, P/N 03587819 190). Sample preparation is performed according to the manual using the COBAS^{®} AmpliPrep machine. After sample preparation, the purified sample is mixed with the following reagents:

| | |
|---|---|
| purified sample: | 45 µl |
| HBV Mn²⁺ (from HBV CS4 cassette): | 15 µl |
| HBV MMx (from HBV CS4 cassette): | 35 µl |
| HBV QS (from HBV CS4 cassette): | 5 µl |
| Total Volume | 100 µl |

The obtained solution is then pipetted into the sample port (18) of a micro-fluidic device as shown in Figure 1 (A) having six reaction chambers. The sample is filled into the chip using a pump. After the filling the device is closed with an integrated cap attached to the device. Thermal cycles using a thermal cycler adopted to hold the device and to detect the reactions in the reaction chambers in real-time are applied to the device according to the following protocol:

| | Ramp [K/s] | Temperature [°C] | Time [s] | Aquisation |
|---|---|---|---|---|
| Pre Cycle | 1.2 | 50.0 | 120 | 0 |
| Sequence Start | | | | |
| Denaturation | 1.2 | 95.0 | 15 | 0 |
| Annealing | 1.2 | 59.0 | 25 | 1 |
| Sequence End | 5 | | | |
| Sequence Start | | | | |
| Denaturation | 1.2 | 91.0 | 15 | 0 |
| Annealing | 1.2 | 52.0 | 25 | 1 |
| Sequence End | 55 | | | |
| Post Cycle | 1.2 | 40.0 | 120 | 0 |

During initial heating of the device the temperature driven valves are closing according to the geometric design of the dead end branch for the specific temperature and remain closed until the PCR reaction is finished and the device is cooled down.

PCR performance is monitored online in real time during thermal cycling. Similar Ct values indicative for the amount of HBV present in the sample can be detected in each of the reaction chambers (see Figure 10).

### Reference numerals

- 1: micro-fluidic device
- 11: reaction chamber
- 12: inlet channel
- 13: outlet channel
- 14: dead end branch
- 15: main channel
- 16: geometric valve
- 17: collector channel
- 18: sample inlet port
- 19: compensation volume

## Claims

1. A micro-fluidic device for the use in an apparatus for analyzing a liquid sample by nucleic acid amplification at least comprising a reaction chamber having an inlet channel suitable for filling said reaction chamber with said liquid sample and an outlet suitable for the discharge of fluid from said reaction chamber, wherein said outlet may be closed after the reaction chamber is filled with said liquid sample and wherein said inlet channel further contains at least one dead end branch, said branch having no outlet, containing a gas and being dimensioned to at least contain the amount of gas sufficient to seal said inlet channel when said gas expands from said branch while at least said branch is heated.

2. The micro-fluidic device according to claim 1, wherein said dead end branch is substantially perpendicular to said inlet channel.

3. The micro-fluidic device according to any one of claims 1 to 2, wherein the inner wall of said inlet channel at least at the junction between said dead end branch and said inlet channel is covered with a hydrophobic coating.

4. The micro-fluidic device according to any one of claims 1 to 3 having a plurality of reaction chambers, each reaction chamber having an inlet channel and an outlet, wherein each inlet channel further contains at least one dead end branch, said branch having no outlet, containing a gas and being dimensioned to at least contain the amount of gas sufficient to seal said inlet channel when said gas expands from said branch while at least said branch is heated.

5. The micro-fluidic device according to claim 4, wherein each inlet channel is on the one end linked to one reaction chamber and on the other end linked to a main channel, said main channel being useful for filling each of said plurality of reaction chambers with said liquid sample.

6. The micro-fluidic device according to any one of claims 1 to 5, wherein said inlet channel contains at least two dead end branches and wherein the openings of said dead end branches into the inlet channel are positioned adjacent to another or substantially opposite to another.

7. The micro-fluidic device according to any one of claims 1 to 6, wherein the outlet is an outlet channel and comprises a geometric valve and / or at least one dead end branch and / or a hydrophobic coating.

8. An apparatus for analyzing a liquid sample by nucleic acid amplification at least comprising
- a micro fluidic device according to any one of claims 1 to 7,
- a device for monitoring the nucleic acid amplification reaction, and
- a heating device at least covering said at least one dead end branch of said micro-fluidic device.

9. The apparatus according to claim 8, wherein said heating device further covers said reaction chamber of said micro-fluidic device.

10. The apparatus according to any one of claims 8 and 9 further comprising a heat control.

11. The apparatus according to any one of claims 8 to 10, wherein said heating device is capable of performing thermal profiles.

12. A method for analyzing a liquid sample by nucleic acid amplification at least comprising
- providing a liquid sample in the reaction chamber of a micro-fluidic device according to any one of claims 1 to 7 via the inlet channel of said device,
- applying heat to at least the dead end branch of said device by a heating device whereby the gas within the dead end branch expands and thereby seals the inlet channel of said device,
- amplifying nucleic acids in said liquid sample, and
- monitoring the amplification reaction.

13. A method for amplifying nucleic acids in a liquid sample at least comprising
- providing a liquid sample in the reaction chamber of a micro-fluidic device according to any one of claims 1 to 7 via the inlet channel of said device,
- applying heat to at least the dead end branch of said device by a heating device whereby the gas within the dead end branch expands and thereby seals the inlet channel of said device, and
- amplifying nucleic acids in said liquid sample.

14. The method according to any one of claims 12 or 13 further comprising
- closing the inlet and / or the outlet channel after the reaction chamber is filled with said liquid sample.

15. The method according to any one of claims 12 to 14, wherein nucleic acids are amplified using polymerase chain reaction, ligase chain reaction, nucleic acid sequence-based amplification, rolling circle amplification, strand-displacement amplification, isothermal amplification, touchdown polymerase chain reaction or transcription-mediated amplification.

16. Use of a dead end branch compartment containing a defined volume of gas for closing a channel containing a liquid, wherein said gas expands from said dead end branch compartment into said channel, thereby dividing said liquid into two portions and closing said channel when heat is applied to at least said dead end branch compartment.

## Amended claims

### Amended claims in accordance with Rule 137(2) EPC.

**1.** A micro-fluidic device (1) for the use in an apparatus for analyzing a liquid sample by nucleic acid amplification at least comprising
- a reaction chamber (11) having an inlet channel (12) suitable for filling said reaction chamber (11) with said liquid sample and
- an outlet (13) suitable for the discharge of fluid from said reaction chamber (11),
wherein said outlet (13) may be closed after the reaction chamber (11) is filled with said liquid sample and wherein said inlet channel (12) further contains at least one micro-fluidic valve comprising a dead end branch (14), said dead end branch (14) having no outlet, containing a gas and being dimensioned to at least contain the amount of gas sufficient to seal said inlet channel (12) when said gas expands from said dead end branch (14) into said inlet channel (12) to form a diffusion barrier capable of reversibly sealing said inlet channel (12) while at least said dead end branch (14) is heated.

**2.** The micro-fluidic device (1) according to claim 1, wherein said dead end branch (14) is substantially perpendicular to said inlet channel (12).

**3.** The micro-fluidic device (1) according to any one of claims 1 to 2, wherein the inner wall of said inlet channel (12) at least at the junction between said dead end branch (14) and said inlet channel (12) is covered with a hydrophobic coating.

**4.** The micro-fluidic device (1) according to any one of claims 1 to 3 having a plurality of reaction chambers (11), each reaction chamber (11) having an inlet channel (12) and an outlet (13), wherein each inlet channel (12) further contains at least one micro-fluidic valve comprising a dead end branch (14), each dead end branch (14) having no outlet, containing a gas and being dimensioned to at least contain the amount of gas sufficient to seal said inlet channel (12) when said gas expands from said dead end branch (14) into said inlet channel (12) to form a diffusion barrier capable of reversibly sealing said inlet channel (12) while at least said dead end branch (14) is heated.

**5.** The micro-fluidic device (1) according to claim 4, wherein each inlet channel (12) is on the one end linked to one reaction chamber (11) and on the other end linked to a main channel (15), said main channel (15) being useful for filling each of said plurality of reaction chambers (11) with said liquid sample.

**6.** The micro-fluidic device (1) according to any one of claims 1 to 5, wherein said inlet channel (12) contains a micro-fluidic valve comprising at least two dead end branches (14) and wherein the openings of said dead end branches into the inlet channel (12) are positioned adjacent to another or substantially opposite to another.

**7.** The micro-fluidic device (1) according to any one of claims 1 to 6, wherein the outlet is an outlet channel (13) and comprises a geometric valve (16) and / or at least one dead end branch (14) and / or a hydrophobic coating.

**8.** An apparatus for analyzing a liquid sample by nucleic acid amplification at least comprising
- a micro fluidic device (1) according to any one of claims 1 to 7,
- a device for monitoring the nucleic acid amplification reaction, and
- a heating device at least covering said at least one dead end branch (14) of said micro-fluidic device (1).

**9.** The apparatus according to claim 8, wherein said heating device further covers said reaction chamber (11) of said micro-fluidic device (1).

**10.** The apparatus according to any one of claims 8 and 9 further comprising a heat control.

**11.** The apparatus according to any one of claims 8 to 10, wherein said heating device is capable of performing thermal profiles.

**12.** A method for analyzing a liquid sample by nucleic acid amplification at least comprising
- providing a liquid sample in the reaction chamber (11) of a micro-fluidic device (1) according to any one of claims 1 to 7 via the inlet channel (12) of said device (1),
- applying heat to at least the dead end branch (14) of said device (1) by a heating device whereby the gas within the dead end branch (14) expands from said dead end branch (14) into said inlet channel (12) to form a diffusion barrier and to thereby reversibly seal the inlet channel (12) of said device (1),
- amplifying nucleic acids in said liquid sample, and
- monitoring the amplification reaction.

**13.** A method for amplifying nucleic acids in a liquid sample at least comprising
- providing a liquid sample in the reaction chamber (11) of micro-fluidic device (1) according to any one of claims 1 to 7 via the inlet channel (12) of said device (1),
- applying heat to at least the dead end branch (14) of said device (1) by a heating device whereby the gas within the dead end branch (14) expands from said dead end branch (14) into said inlet channel (12) to form a diffusion barrier and to thereby reversibly seal the inlet channel (12) of said device (1), and
- amplifying nucleic acids in said liquid sample.

**14.** The method according to any one of claims 12 or 13 further comprising
- closing the inlet (12) and / or the outlet (13) channel after the reaction chamber (11) is filled with said liquid sample.

**15.** The method according to any one of claims 12 to 14, wherein nucleic acids are amplified using polymerase chain reaction, ligase chain reaction, nucleic acid sequence-based amplification, rolling circle amplification, strand-displacement amplification, isothermal amplification, touchdown polymerase chain reaction or transcription-mediated amplification.

**16.** Use of a dead end branch compartment (14) containing a defined volume of gas to form a micro-fluidic valve for closing a micro-fluidic channel (12) containing a liquid, wherein said gas expands from said dead end branch compartment (14) into said channel (12) to form a diffusion barrier capable of reversibly sealing said channel (12) and to thereby divide said liquid into two portions and close said channel (12) when heat is applied to at least said dead end branch compartment (14).
